# EUROPEAN PATENT APPLICATION

(11) **EP 4 520 419 A1**
(43) Date of publication of application: **12.03.2025**
(21) Application number: 24197000.3
(22) Date of filing: 28.08.2024
(51) Int. Cl.: B01D 17/12, B04B 11/02, C11B 1/00, C11B 3/16

(54) **PERIMETER WATER SUPPLIER FOR HORIZONTAL OIL SEPARATOR MACHINES**

(30) Priority: 07.09.2023 ES 202331591 U
(71) Applicant: Instalacion Mantenimiento y Sistemas de Pesaje, S.L., 28004 Madrid (ES)
(72) Inventor: MARTINEZ MARTINEZ, Pedro Jose, 28004 Madrid (ES)
(74) Representative: Toro Gordillo, Ignacio Maria

(57) **Abstract**

This invention is intended to obtain an improvement in the performance of separator machines, and an improvement in the quality of the aromas of the final product. It is made up of a tubular body (1), which functions as an enclosure, which at one of the ends thereof includes an adapter (2) with a flexible hose for the coupling thereof to the feed pipe for the olive paste, while at the opposite end it includes a coupling (4) to the corresponding feed tube of the horizontal separator centrifuge machine, incorporating a water inlet adapter (5) to a reserve chamber (6) internally delimited by a wall with holes (7) which enable water to pass from said reserve chamber (6) to an expansion chamber (8), a water retention and decompression chamber (9) and a solid non-return element (10) being concentrically arranged.

## Description

### TECHNICAL FIELD

The present invention relates to a perimeter water supplier for horizontal oil separation machines, horizontal centrifuges, which is used to separate the components of a paste or a mixture according to the densities thereof.

The objective of the invention is to obtain an improvement in the performance of the separator machines, and an improvement in the quality of the aromas of the final product, as well as eliminating excess contact of the water with the paste, avoiding unnecessary emulsions due to pressure from a direct water jet, as well as washing the material or paste due to excess contact.

The invention is within the scope of the agri-food sector and in wastewater treatment.

### BACKGROUND OF THE INVENTION

As known, supplying water to the olive paste from which the oil is to be obtained improves the quality of the product and optimizes production costs, such that the undue supply of water can cause aromas to be lost with the subsequent washing of the oil.

Current supplying techniques are not fully regulated, and when it is necessary to add water into the horizontal centrifuge machine, this is performed by means of injection into the integrated feed pipe for olive paste, in some cases also into the feed mouth of the machine, but always with a direct water jet.

As a result of the foregoing, there is an excess of contact of the water with the paste, generating unwanted emulsions due to the pressure of the direct water jet, as well as the washing of the material due to excess contact.

These and other drawbacks occur in the current processes and ways of supplying water to the olive paste from which the oil is extracted.

### DESCRIPTION OF THE INVENTION

The water supplier that is recommended offers a completely satisfactory solution to the problem set out above, based on a simple but effective solution, wherein the water is provided in a perimetric manner, avoiding unwanted emulsions due to the pressure from the direct water jet, and aiding the stability of the machine in the separation process by using the centrifugal forces generated inside the corresponding drum, such that the water is injected in a perimetric manner, entering the inside of the drum and being subjected to centrifugal forces in advance, an inner ring of water particles settling, acting as a screen so that the lower-density particles reach the internal surface of the drum, thus preventing them from mixing with higher-density particles and being lost through the outlet for solids.

More specifically, the perimeter water supplier for horizontal oil separators is made up of a tubular body wherein a series of internal ducts are established which prevent said water from penetrating into the core of the paste, saving it from emulsions due to injection as well as mixing and washing.

The tubular body includes, at one of the ends thereof, an adapter for coupling to the feed pipe of the olive paste, while at the opposite end it includes an adapter for coupling to the corresponding pipe of the horizontal separator machine, this coupling being able to be a clamp or threaded, etc.

The body includes a water inlet adapter provided radially and externally to the body, such that said adapter, through which the water is applied, reaches a water reserve chamber, the internal wall of which has multiple holes through which the water reaches a water retention and decompression chamber, concentrically to which an expansion chamber for the olive paste is established, and which the water accesses tangentially, produced precisely by said decompression chamber.

Between the wall with holes and the concentric expansion chamber, a solid non-return element is provided, consisting of a hollow and concentric cylinder. Between this cylinder and the cylinder with the water inlet holes is where the water retention and decompression chamber is established.

It must also be mentioned that the inlet adapter for the olive mass or paste has a straight section, to facilitate its entry, which passes through the water feeder, avoiding its recoil and blockages due to the gravitational effect.

The water adapter will have a large enough cross section to enable a sufficient flow of water to be supplied, such that the water enters the toroidal reserve chamber with a minimal loss of load, caused by a reduction of the outlet cross section, driving the water through the aforementioned holes, which alleviate water by directing it to the water retention and decompression chamber, such that the circulation of water, from the inlet until it exits, is always constant and homogeneous. The cylindrical body making up the solid non-return element prevents the obstruction of the holes and internal water conduction chambers from peel, pulp or stone particles, with the particularity that the water decompression chamber supplies water in a manner that is perimetric, constant and homogeneous, in the external barrier of the solid olive paste, which enters the expansion chamber, settling in a linear manner in the direction of the flow of paste being fed.

The device includes an external protective enclosure which supports the structure by giving it a structural consistency for working with high pressure.

The internal duct structure of the device prevents water from penetrating into the core of the olive paste, saving it from emulsions due to injection, as well as mixing and washing, in this manner first preparing a ring in the same mouth of the machine and assisting the subsequent separation therein.

Moreover, the internal chambers of the perimeter water supplier also reduce the direct impact pressure on the paste, being distributed through the holes of the first chamber to a second housing, or drive chamber, which launches water in a linear and superficial manner due to the feature thereof.

From this structuring, the following advantages are derived:
- The aggregation of water with the perimeter water supplier is performed at the most optimal point, meaning in the feed tube of the horizontal separator, without producing unwanted blockage, such as the current ones in the injection system, from washing stones and the subsequent obstruction in the feeder which introduces the paste into the drum.
- The perimeter water supplier maintains minimal contact with the bulk of the flow of the paste being fed, forming a ring of water which acts as a casing along the internal duct.
- It improves the performance of the machinery as well as the quality of the resulting oil. First of all, due to the incorporation of water in a perimetric manner, taking advantage of the operations of the centrifuge machine, the particles that first enter into the chamber are made of perimeter water, which physically forms the first separating ring in the chamber of the drum, thus improving the separation process. Second, this is to prevent penetration inside the solid paste and therefore more direct contact with the oil, improving the loss of aroma due to contact with the water.

### DESCRIPTION OF THE DRAWINGS

As a complement to the description to be provided herein, and for the purpose of helping to make the features of the invention more readily understandable, in accordance with a preferred practical exemplary embodiment thereof, said description is accompanied by a set of drawings which, by way of illustration and not limitation, represent the following:

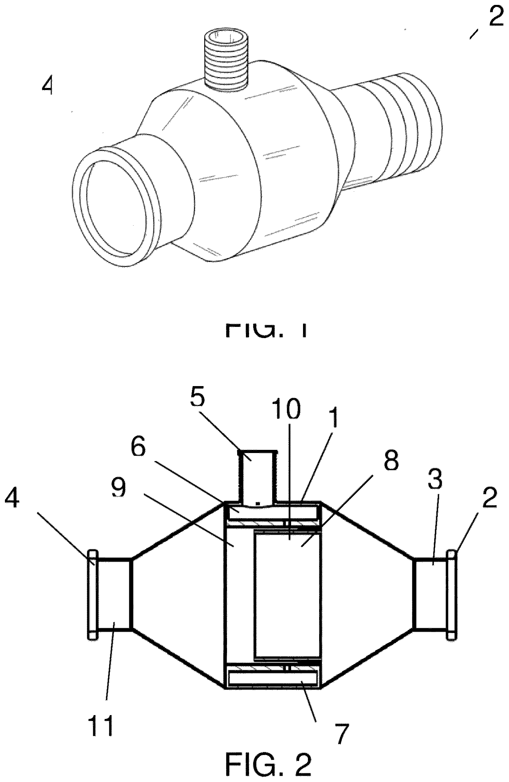

Figure 1 shows a perspective view of a perimeter water supplier for horizontal oil separator machines made in accordance with the object of the present invention.
Figure 2 shows a profile view and a cross-sectional view of said device.

### PREFERRED EMBODIMENT OF THE INVENTION

In view of the figures outlined, it can be seen how the perimeter water supplier for horizontal oil separator machines is made up of a tubular body (1) that incorporates a flexible hose adapter (2) at one end for coupling to the corresponding feed pipe for the olive paste to the horizontal separator machine, since the device is provided to be inserted between said feed pipe for the olive paste and the corresponding separator machine.

Between the main tubular body (1) and the coupling adapter (2), a first straight section (3) is provided longitudinally and geometrically aligned with the tubular body (1) (its imaginary axes of revolution are coincident), which facilitates the entry of the olive mass, while at the outlet an adapter (4) is provided, which can be a clamp, threaded or similar, for coupling to the corresponding machine. This adapter is preceded by a second straight section ( 11), also geometrically aligned with the tubular body (1) and the first straight section (3), to facilitate the adaptation of the mass at the entrance to the decanter and which communicates with a reserve chamber (6) internally delimited by a wall with holes (7) which enable water to pass from said reserve chamber (6) to an expansion chamber (8) for the olive paste that passes through the supplier, a water retention and decompression chamber (9) and a solid non-return element (10) being concentrically arranged, this being established as a tubular body concentric to the wall with holes (7).

As mentioned previously, the perimeter water supplier is provided to add water to the feed tube to the separator machine, such that said tubular body (1) has a water inlet adapter (5) which includes a check valve so that the water enters the reserve chamber (6) without the possibility of return due to overpressure. The reserve chamber (6) has an internal volume calculated to house a sufficient reserve quantity that guarantees five times the volume of evacuation water through the holes (7) preventing abrupt fluctuations due to flow regulation.

These perimeter holes (7) have a preferred number of 32 units, such that the diameter thereof makes it so that the total sum of the surface of all the holes (7) will be less than 10% of the surface of the water inlet adapter (5), reducing the outlet flow and subjecting the reserve water chamber (6) to a small back pressure, aiding the stability of the circulation of water and the distribution thereof.

Water is circulated through the perimeter holes (7) to the decompression chamber (9) which is made up of 2 hollow and concentric cylinders: one ending 3 mm before the perimeter holes (7) and the second as a solid non-return element (10) which exceeds the holes by 15 mm, thus forming the water retention and decompression chamber (9), which is responsible for directing the water in a perimetric manner in the direction the paste is fed.

The water comes into contact with the paste in the expansion chamber (8) for primary product, said chamber having a larger diameter with which it reduces the circulation speed and the due coupling of the water in a superficial manner.

With regard to the water inlet adapter (5), by including a check valve it ensures that traces of small solid particles inside the water supply pipe do not return, since the non-circulation of water through the check valve prevents this phenomenon. Meanwhile, the water reserve chamber (6) accumulates water from the network pressure, having a storage capacity 5 times the capacity of the volume of water evacuated, with the aim of preventing fluctuations when there is an increase in the demand for paste and thus a homogeneous distribution in the flow of the paste being fed to the horizontal separator machine.

As for the holes (7), they are located on the opposite face of the hollow cylinder that closes the reserve water chamber (6).

As for the decompression chamber (9), it is responsible for launching the circulation of water in a perimetric and superficial manner. Likewise, due to the arrangement of the second hollow cylinder thereof, it prevents the possibility of solid particles being able to obstruct the holes and water outlet. The composition of the decompression chamber (9) is made up, as mentioned previously, of the arrangement of 2 hollow cylinders. The first has a larger diameter which is encased up to 3 millimeters before the perimeter holes (7). The second cylinder is encased inside the first one until the perimeter holes (7) are exceeded by 15 millimeters, such that this arrangement releases the supplied water in the direction of the circulation of the flow of the paste, and forming the cornice that prevents solids from returning, referred to as the solid non-return element (10).

As for the expansion chamber (8), the flow of paste is joined with the supplied water therein, the internal diameter being greater than the one through which the inlet of primary product comes. In this manner, the speed of the flow decreases therein as well as the internal pressure; therefore, the water supplied perimetrically therein acts as a casing for the paste throughout the feed tube which enters in the horizontal separator machine.

Finally, it should be said that the flow of paste that enters into the drum of the horizontal separator machine is encased by the water supplied without being introduced therein, thereby preventing emulsions due to excess pressure in the injection of the water, the water having minimal contact with the paste, and achieving the objective of increasing the production and decreasing the loss of aromas due to contact with water.

## Claims

1. A perimeter water supplier for horizontal oil separator machines, which is provided for the installation thereof, inserted between a feed pipe for the olive paste and the separator machine is **characterized in that** it is made up of a tubular body (1), which functions as an enclosure, which at one of the ends thereof and after a bend of curved segment (3) includes an adapter (2) with a flexible hose for the coupling thereof to the feed pipe for the olive paste, establishing between said adapter (2) and the tubular body (1) a first conduction or straight section (3) whose imaginary axis of revolution coincides with the imaginary axis of revolution of the tubular body (1), while at the opposite end it includes a second adapter (4), with the interposition of a second straight section (11) equally aligned with the tubular body (1) and the first straight section (3), second adapter (4) for coupling to the corresponding feed tube of a horizontal separator centrifuge machine, with the particularity that said tubular body (1) incorporates on the outer wall thereof a water inlet adapter (5) to a reserve chamber (6) concentric to the outer wall of the tubular body (1) and internally delimited by an equally concentric circular tubular wall with holes (7) which enable water to pass from said reserve chamber (6) to an expansion chamber (8) inside of both and equally concentric for the olive paste that passes through the supplier, a water retention and decompression chamber (9) and a solid non-return element (10) being concentrically arranged and between the wall with holes (7) and the expansion chamber (8), this being established as a tubular body concentric to the wall with holes (7) and closed on the end thereof facing the coupling (4).

2. The perimeter water supplier for horizontal oil separator machines, according to claim 1, **characterised in that** the water inlet adapter (5) to the water reserve chamber (6) incorporates a non-return check valve for incoming water.

3. The perimeter water supplier for horizontal oil separator machines, according to claim 1, **characterised in that** the holes (7) are located on the opposite face of a hollow cylinder that closes the water reserve chamber, having a number of 32 units, such that the diameter thereof makes it so that the total sum of the surface of all the holes (7) will be less than 10% of the surface of the water inlet adapter (5).

4. The perimeter water supplier for horizontal oil separator machines, according to the preceding claims, **characterised in that** the decompression chamber (9) is made up of the arrangement of 2 hollow cylinders, the first of which has a larger diameter and is encased up to 3 millimeters before the perimeter holes (7), while the second hollow cylinder is encased inside the first one until the perimeter holes (7) are exceeded by 15 millimeters.
